# FASCICULE DE BREVET EUROPEEN

(11) **EP 4 108 526 B1**
(45) Date de publication et mention de la délivrance du brevet: **16.04.2025**
(21) Numéro de dépôt: 22179996.8
(22) Date de dépôt: 20.06.2022
(51) Int. Cl.: B60R 21/02, B60N 2/22

(54) **CLOISON TRANSVERSALE POUR VEHICULE, ET VEHICULE EQUIPE D'UNE TELLE CLOISON**
QUERTRENNWAND FÜR FAHRZEUG UND FAHRZEUG, DAS MIT EINER SOLCHEN TRENNWAND AUSGESTATTET IST
TRANSVERSE PARTITION FOR A VEHICLE, AND VEHICLE EQUIPPED WITH SUCH A PARTITION

(30) Priorité: 23.06.2021 FR 2106691
(43) Date de publication de la demande: 28.12.2022
(73) Titulaire: Renault s.a.s, 92100 Boulogne Billancourt (FR)
(72) Inventeur: LHER, Alain, 78640 Villiers Saint Frédéric (FR); POULLARD, Christophe, 78640 Villiers Saint Frédéric (FR)

(56) Documents cités:
- FR-A1- 2 967 110
- FR-A1- 3 063 697
- US-A- 4 971 378

## Description

L'invention se rapporte aux véhicules, notamment aux véhicules utilitaires, et plus particulièrement aux véhicules utilitaires équipés d'une cloison transversale, nommée également cloison d'arrêt de charges, pour séparer la cabine de conduite d'un véhicule automobile d'une zone de chargement arrière prévue pour transporter des objets volumineux. L'invention se rapporte également à une cloison transversale pour séparer la cabine d'un véhicule de la zone de chargement arrière, ainsi qu'à un véhicule comprenant une telle cloison transversale et un siège adossé à la cloison transversale.

Le document FR3063697 A1 forme la base du préambule de la revendication 1 et divulgue un exemple de cloison transversale de l'art antérieur.

Les cloisons d'arrêt de charges permettent d'assurer la sécurité des passagers du véhicule occupant la cabine de conduite équipée de sièges conducteur et passager(s). Elles évitent notamment que les charges stockées dans la zone de chargement ne viennent heurter les passagers lors du déplacement du véhicule et nécessitent pour cela d'être fixes. Elles procurent également une isolation phonique et thermique avec l'espace de chargement.

Le problème est que celles-ci sont généralement placées de telle sorte soit à maximaliser le chargement, ce qui est réalisé au détriment du confort du siège, empêchant ainsi le débattement de celui-ci en position d'inclinaison arrière du dossier de siège, ou soit par une inclinaison limitée de la paroi fixe, elles permettent une inclinaison faible et insatisfaisante de siège toujours au détriment de la capacité de chargement.

La présente invention apporte une solution à ce problème.

A cet effet, l'invention a pour objet une cloison transversale comprenant les caractéristiques techniques définies dans la revendication 1.

La cloison transversale selon l'invention présente l'avantage de pouvoir être modulable et adaptée aux besoins de confort et de chargement. Elle peut être déployée par les occupants du véhicule en fonction de leurs besoins en termes de confort d'inclinaison de siège, tout en favorisant une utilisation maximale de la zone de chargement. En cas de place en zone de chargement, elle permet a l'occupant du siège à proximité de la cloison, lorsque le panneau mobile est placé en position déployée, c'est-à-dire pivoté selon un axe disposé parallèlement à la bordure inférieure de l'ouverture et en contact avec la bordure inférieure, de dégager un espace de confort permettant de réaliser le réglage du siège dans une position dite de confort, dans laquelle le dossier est incliné vers l'arrière du véhicule et le siège éventuellement reculé. Le positionnement de l'axe le long de la bordure inferieure a pour effet le déploiement de l'espace de confort en position haute, à proximité du haut de dossier du siège de l'occupant, permettant avantageusement au haut de dossier de se positionner dans cet espace.

Dans des formes de réalisation préférées de l'invention, on a en outre recours à l'une et/ou à l'autre des caractéristiques suivantes prises seules ou en combinaison:
- l'axe pivot est distinct de la bordure inferieure et en contact avec cette dernière au moyen de boucles de liaison, l'axe pivot traversant les boucles de liaison.
- le bord externe est muni d'une poignée.
- le panneau mobile est formé par une structure tubulaire.
- le panneau mobile comprend un panneau central arrière relié latéralement au panneau fixe au moyen d'une pluralité de volets rigides repliables.
- la pluralité de volets rigides repliables reliant le panneau central arrière au panneau fixe sont repliés lorsque le panneau mobile est en position d'obturation de l'ouverture et sont dépliés lorsque le panneau mobile est dans sa position de dégagement de l'ouverture.
- la pluralité de volets rigides repliables est formée en matière souple.

L'invention a également pour objet un véhicule comprenant une cloison transversale selon l'une quelconque des revendications précédentes et un siège dont le dossier présente un débattement à l'intérieur d'un espace de confort dégagé par le panneau mobile dans sa position déployée.

D'autres caractéristiques et avantages de l'invention apparaîtront à la lecture de la description détaillée qui suit, faite à titre d'exemple non limitatif et en référence aux dessins annexés dans lesquels :
- [Fig.1] représente une vue partiellement évidée en perspective du véhicule selon l'invention lorsque le panneau mobile de la cloison est déployé et le siège est en position confort
- [Fig.2] représente schématiquement une vue latérale d'un véhicule selon l'invention muni d'une cloison de séparation selon l'invention
- [Fig.3] est une représentation en perspective de la cloison selon l'invention lorsque le panneau mobile en position d'obturation,
- [Fig.4] représente schématiquement une vue latérale d'un véhicule selon l'invention muni d'une cloison de séparation selon l'invention lorsque la plage de rangement est escamotée,

Dans le contexte de la présente invention, les termes « avant », « arrière », « gauche », « droite », « inférieur », « supérieur », s'entendent en référence à un repère des véhicules automobiles comprenant un premier axe longitudinal X, horizontal et orienté de l'arrière vers l'avant, c'est-à-dire du coffre vers le capot, un axe transversal Y et un axe vertical Z dirigé du bas vers le haut, c'est-à-dire du plancher vers le toit du véhicule, avec un siège disposé dans le véhicule, le dossier du siège étant en position d'utilisation face à la route.

Par ailleurs, sur les différentes figures, les mêmes références désignent des éléments identiques ou similaires.

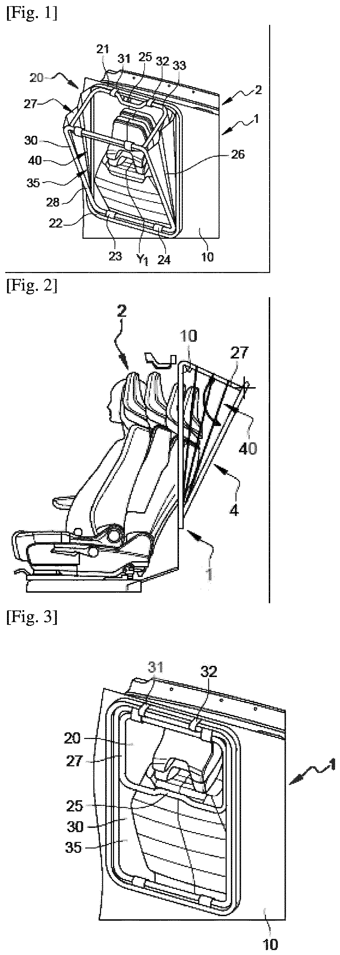

Sur la [Fig.1], on a représenté une vue en perspective, partiellement évidée d'un véhicule utilitaire 1 comprenant une cabine de conduite 2 dans laquelle sont installés un volant et au moins un siège destiné à accueillir le conducteur et éventuellement un ou plusieurs passagers. La vue est réalisée depuis l'espace arrière de chargement. La cabine de conduite 2 est séparée d'une zone de chargement arrière 4 par une cloison transversale 1. La paroi de la cloison transversale est agencée de manière classique mais non limitative contre l'arrière des sièges avant. Cette configuration permet de maximiser la taille de la zone de chargement.

La paroi transversale 1 est fixée à la structure du véhicule. Elle est, par exemple, fixée au plancher du véhicule ainsi qu'au pavillon, par exemple, à une traverse structurelle du pavillon, ainsi qu'aux parois latérales du véhicule.

La cloison transversale 1 comprend une ouverture 20 mettant en communication la cabine de conduite et la zone de chargement arrière. L'ouverture 20 est refermable par un panneau mobile 30 monté pivotant autour d'un axe pivot Y1 solidaire du panneau fixe 10. Sur la [Fig.1], le panneau mobile est en position de dégagement de l'ouverture. L'ouverture comprend une bordure supérieure 21 et une bordure inférieure 22 sensiblement rectilignes. Comme visible sur la [Fig.1], l'ouverture 20 se présente sous une forme rectangulaire et l'axe pivot Y1 est disposé parallèlement à la bordure inferieure 22 de l'ouverture et en contact avec cette dernière. Le déploiement du panneau mobile 30 génère un espace de confort 40 dans la cabine, notamment à l'arrière du siège conducteur. Cet espace de confort 40 permet le débattement du siège à l'intérieur de celui-ci. Par débattement, on entend la possibilité d'effectuer le réglage du siège conducteur en position confort, c'est-à-dire permettre un déplacement du haut de dossier de siège vers l'arrière, et notamment à l'intérieur de l'espace de confort 40 dégagé par le déploiement du panneau mobile 30. Du fait du positionnement de l'axe de pivotement Y1 à proximité de la bordure inferieure de l'ouverture, l'espace de confort 40 est plus développé en partie haute qu'en partie basse à proximité de son axe de pivotement Y1, ce qui permet au dossier du siège de débattre en partie haute de dossier, avec notamment la possibilité d'avoir un siège reculé, permettant une position de conduite plus confortable. L'espace de confort 40 s'étend selon la direction transversale, sur toute la largeur du panneau mobile 30 et de façon plus profonde longitudinalement en partie haute.

Comme visible sur la [Fig.1], le panneau mobile 30 est en position de dégagement. Le panneau mobile 30 comprend une armature tubulaire 28, et présente une panneau central arrière 35, un panneau mobile supérieur 27 pivotant, notamment articulé sur le panneau central arrière 35. Suivant certains modes de réalisation le panneau central arrière 35 peut être occultant ou vitré. L'armature tubulaire 28 permet avantageusement d'apporter de la légèreté au panneau mobile 30. Sur la [Fig.1], l'axe de pivotement Y1 est réalisé par l'armature tubulaire basse du panneau mobile, pivotant à l'intérieur de boucles de liaison 23, 24, présentant également une forme tubulaire et solidaires de la bordure inferieure 22 de l'ouverture du panneau fixe. Chaque boucle de liaison présentent une ouverture traversée par l'axe pivot Y1. Dans un mode de réalisation alternatif, l'axe pivot Y1 pourrait être confondu avec la bordure inférieure 22.

Comme visible en [Fig.1], le panneau mobile 30 est muni de moyens de maintien 27 pour assurer le maintien du panneau mobile 30 dans la position de dégagement de l'ouverture 20. Ces moyens de maintien 27 permettent avantageusement le blocage en position de déploiement du panneau mobile. En détails, ceux-ci sont constitués d'un panneau supérieur de déploiement 27 pivotant et comprenant un bord externe 33, la bordure supérieure 21 de l'ouverture 20 comprenant des éléments d'accueil et de verrouillage 31, 32 en position du bord externe 33 du panneau supérieur de déploiement 27. Comme visible sur la [Fig.1], ces moyens d'accueil sont constitués par des boucles de réception 31, 32, pour le bord externe tubulaire 33 du panneau supérieur de déploiement 27.

Comme visible sur la [Fig.1], le bord externe 33 est muni d'une poignée 25, notamment constituée par deux portions obliques encadrant une portion droite du bord externe du panneau supérieur. Celle-ci est disposée entre les deux portions du bord externe 33 du panneau supérieur de déploiement 27 destinées à être accueillies dans les éléments de verrouillage et permet avantageusement de commander à la fois le déploiement du panneau supérieur 27 et la fixation des portions de bord externe du panneau supérieur à l'intérieur des éléments d'accueil et de verrouillage 31, 32. L'espace de confort peut être déployé en conduite du véhicule ou à l'arrêt, afin de permettre à l'occupant du siège de se relaxer. La position de la poignée 25 permet avantageusement sa manipulation simple depuis l'espace cabine.

La [Fig.2] représente une vue latérale d'un véhicule selon l'invention muni d'une cloison de séparation selon l'invention, dans laquelle le panneau mobile est en position déployée. Plusieurs positions de dossiers de siège sont représentées matérialisant le débattement à l'intérieur de l'espace de confort généré par le déploiement du panneau mobile.

Le sens de pivotement du panneau supérieur de déploiement est indiqué vers le bas, dans le but de passer d'une position déployée à une position repliée.

Comme visible sur les figures 1 et 2, le panneau mobile présente une portion arrière 35 reliée latéralement au panneau fixe 10 au moyen d'une pluralité de panneaux rigides 26 repliables. Ces panneaux rigides repliables 26 sont repliés lorsque le panneau mobile 30 est en position d'obturation de l'ouverture 20 et sont dépliés lorsque le panneau mobile 30 est dans sa position de dégagement de l'ouverture. Ils se présentent sous forme de soufflet, sont constitués par exemple en matière souple plastique, de forme sensiblement triangulaire et présentant des axes de pliages qui permettent avantageusement d'assurer un rangement compact et reproductible lorsque le panneau mobile est en position escamotée. En position de déploiement, les volets rigides repliables 26 permettent d'assurer l'isolation thermique et phonique de la cabine par rapport à la zone de rangement arrière. Ils ont aussi une fonction sécuritaire vis-à-vis des occupants en permettant la retenue d'objets de part et d'autre de ces volets. Ils sont disposés de chaque côté latéralement de l'ouverture 20 et peuvent, dans un mode de réalisation complémentaire, être aussi prolongés en partie supérieure formant un volet continu. Alternativement, les volets peuvent être enroulables.

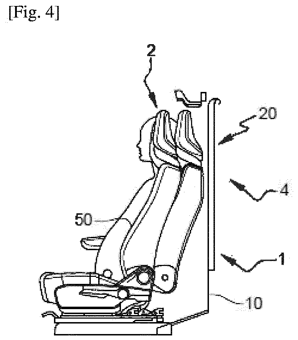

Les figures 3 et 4 portent sur le panneau mobile 30 en position repliée. Le panneau mobile 20 dans cette position repliée, forme une continuité de la cloison fixe 10. Comme visible en [Fig.3] et 4, le siège est donc contraint d'avoir une position de son dossier sensiblement verticale et sensiblement avancée. Le panneau supérieur de déploiement est pivoté selon un axe disposé placé parallèlement au bord supérieur du panneau mobile. La poignée est disposée selon le bord opposé sensiblement au centre de l'ouverture 20 de la cloison.

Le déploiement du panneau mobile 30 est réalisé de la façon suivante : l'occupant se saisit de la poignée 25 présente sur le panneau supérieur 27 et exerce une pression sur le panneau supérieur pour dégager et déployer selon la direction longitudinale le panneau central mobile 35 relié au panneau supérieur sur le bord arrière du panneau supérieur. Un espace de confort 40 est ainsi créé au sein de l'espace de chargement. Afin de maintenir cet espace de confort 40, il verrouille le bord externe 33 à l'intérieur des moyens de verrouillage 31, 32.

Le repliement s'effectue de la façon suivante : une pression est exercée sur la poignée 25 afin de désengager les portions de bord externe 33 des moyens de verrouillage 31,32. Le panneau mobile supérieur 27 est replié contre le panneau central arrière 35, ce qui rend possible ensuite la traction de l'ensemble par l'occupant afin de ramener le panneau central arrière 35 dans la continuité du panneau fixe 10 de la cloison. Le rappel en position peut aussi s'effectuer au moyen de ressorts.

La cloison transversale selon l'invention permet avantageusement de mettre à profit la zone de chargement arrière, qui en utilisation, est rarement totalement occupée pour l'ensemble de son volume. Elle est remarquable en ce qu'elle permet de déployer, si nécessaire, un espace de confort permettant le débattement en position confort du siège, tout en conservant la possibilité d'escamoter l'espace de confort, en ramenant le panneau mobile en position d'obturation, lorsque l'espace de confort n'est pas nécessaire ou lorsque la zone de chargement doit être totalement occupée. Elle permet ainsi avantageusement à l'occupant de gérer le compromis entre le volume de chargement et son confort de conduite et /ou de relaxation lorsque le véhicule est à l'arrêt. Les véhicules de chargement sont utilisés continuellement par des professionnels de la livraison et l'invention permet astucieusement de réduire la fatigue du conducteur en proposant un meilleur confort dans la cabine par les possibilités étendues de déploiement du siège. L'invention n'est pas limitée aux modes de réalisation décrits mais par le périmètre de protection défini par les revendications.

De même l'invention ne se limite pas à une cloison derrière le siège conducteur et pourrait tout à fait s'appliquer à une cloison derrière un siège passager.

## Revendications

1. Cloison transversale (1) pour séparer une cabine de conduite (2) d'un véhicule (3) et un espace de chargement arrière (4), où ladite cloison transversale (1) comprend un panneau fixe (10) munie d'une ouverture (20), ladite ouverture (20) comprenant une bordure supérieure (21) et une bordure inférieure (22) sensiblement rectilignes et disposées sur le panneau fixe (10), et un panneau mobile (30) monté pivotant autour d'un axe pivot (Y1) solidaire du panneau fixe (10) entre une position d'obturation dans laquelle ledit panneau mobile (30) comble l'ouverture (20) et une position de dégagement de l'ouverture (20), et en ce que l'axe pivot (Y1) est disposé parallèlement à la bordure inférieure (22) de l'ouverture et en contact avec la bordure inférieure (22), la cloison transversale étant munie de moyens de maintien (27) pour assurer le maintien du panneau mobile (30) dans la position de dégagement de l'ouverture, la cloison transversale étant **caractérisée en ce que** les moyens de maintien comprennent un panneau supérieur de déploiement (27) pivotant, ledit panneau supérieur de déploiement (27) comprenant un bord externe (33), la bordure supérieure (21) de l'ouverture (20) comprenant des éléments d'accueil et de verrouillage (31, 32) du bord externe (33) du panneau supérieur de déploiement (27) sur la bordure supérieure (21) de l'ouverture.

2. Cloison transversale (1) selon la revendication précédente, dans laquelle l'axe pivot (Y1) est distinct de la bordure inferieure (22) et en contact avec cette dernière au moyen de boucles de liaison (23, 24), l'axe pivot (Y1) traversant lesdites boucles de liaison (23, 24).

3. Cloison transversale (1) selon l'une des revendications précédentes, dans laquelle le bord externe (33) est muni d'une poignée (25).

4. Cloison transversale (1) selon l'une quelconque des revendications précédentes dans lequel le panneau mobile (30) est formé par une structure tubulaire (28).

5. Cloison transversale (1) l'une quelconque des revendications précédentes, dans laquelle le panneau mobile comprend un panneau central arrière (35) relié latéralement au panneau fixe (10) au moyen d'une pluralité de volets rigides (26) repliables.

6. Cloison transversale (1) selon la revendication précédente, dans laquelle la pluralité de volets rigides (26) repliables reliant le panneau central arrière (35) au panneau fixe (10) est repliée lorsque le panneau mobile (30) est en position d'obturation de l'ouverture (20) et est dépliée lorsque le panneau mobile (30) est dans sa position de dégagement de l'ouverture.

7. Cloison transversale (1) selon l'une des revendications 5 à 6, dans laquelle la pluralité de volets rigides (26) repliables est formée en matière souple.

8. Véhicule comprenant une cloison transversale (1) selon l'une quelconque des revendications précédentes et un siège (50) dont le dossier présente un débattement à l'intérieur d'un espace de confort dégagé (40) par le panneau mobile (30) dans sa position déployée

## Patentansprüche

1. Quertrennwand (1) zum Trennen einer Fahrerkabine (2) eines Fahrzeugs (3) und eines hinteren Laderaums (4), wobei die Quertrennwand (1) eine feste Platte (10) aufweist, die mit einer Öffnung (20) versehen ist, wobei die Öffnung (20) eine obere Umrandung (21) und eine untere Umrandung (22) aufweist, die im Wesentlichen geradlinig sind und an der festen Platte (10) angeordnet sind, und eine bewegliche Platte (30), die um eine fest mit der festen Platte (10) verbundene Schwenkachse (Y1) zwischen einer Verschlussposition, in der die bewegliche Platte (30) die Öffnung (20) ausfüllt, und einer Position zum Freigeben der Öffnung (20) schwenkbar montiert ist, und die Schwenkachse (Y1) parallel zur unteren Umrandung (22) der Öffnung und in Kontakt mit der unteren Umrandung (22) angeordnet ist, wobei die Quertrennwand mit Haltemitteln (27) versehen ist, um das Halten der beweglichen Platte (30) in der Position zum Freigeben der Öffnung zu gewährleisten, wobei die Quertrennwand **dadurch gekennzeichnet ist, dass** die Haltemittel eine schwenkbare obere Entfaltungsplatte (27) aufweisen, wobei die obere Entfaltungsplatte (27) eine Außenkante (33) aufweist und die obere Umrandung (21) der Öffnung (20) Aufnahme- und Verriegelungselemente (31, 32) der Außenkante (33) der oberen Entfaltungsplatte (27) an der oberen Umrandung (21) der Öffnung aufweist.

2. Quertrennwand (1) nach dem vorhergehenden Anspruch, wobei die Schwenkachse (Y1) von der unteren Umrandung (22) getrennt ist und mit dieser mittels Verbindungsschleifen (23, 24) in Kontakt steht, wobei die Schwenkachse (Y1) durch die Verbindungsschleifen (23, 24) verläuft.

3. Quertrennwand (1) nach einem der vorhergehenden Ansprüche, wobei die Außenkante (33) mit einem Griff (25) versehen ist.

4. Quertrennwand (1) nach einem der vorhergehenden Ansprüche, bei der die bewegliche Platte (30) durch eine Rohrstruktur (28) gebildet wird.

5. Quertrennwand (1) nach einem der vorhergehenden Ansprüche, wobei die bewegliche Platte eine hintere Mittelplatte (35) aufweist, die mittels einer Vielzahl von faltbaren starren Klappen (26) seitlich mit der festen Platte (10) verbunden ist.

6. Quertrennwand (1) nach dem vorhergehenden Anspruch, wobei die Vielzahl von faltbaren starren Klappen (26), die die hintere Mittelplatte (35) mit der festen Platte (10) verbinden, gefaltet wird, wenn sich die bewegliche Wand (30) in der Position zum Verschließen der Öffnung (20) befindet, und entfaltet wird, wenn sich die bewegliche Wand (30) in ihrer Position zum Freigeben der Öffnung befindet.

7. Quertrennwand (1) nach einem der Ansprüche 5 bis **6,** wobei die Vielzahl von faltbaren starren Klappen (26) aus einem flexiblen Material gebildet sind.

8. Fahrzeug mit einer Quertrennwand (1) nach einem der vorhergehenden Ansprüche und einem Sitz (50), dessen Rückenlehne eine Verstellung innerhalb eines Komfortraums aufweist, der von der beweglichen Platte (30) in ihrer ausgefahrenen Position freigegeben (40) wird.

## Claims

1. Transverse partition (1) for separating a driver's cab (2) of a vehicle (3) and a rear cargo space (4), wherein said transverse partition (1) comprises a fixed panel (10) provided with an opening (20), said opening (20) comprising an upper border (21) and a lower border (22) that are substantially rectilinear and arranged on the fixed panel (10), and a movable panel (30) that is mounted so as to be able to pivot about a pivot pin (Y1) integral with the fixed panel (10) between a closing-off position in which said movable panel (30) fills the opening (20) and a position in which the opening (20) is unobstructed, and the pivot pin (Y1) is arranged parallel to the lower border (22) of the opening and in contact with the lower border (22), the transverse partition being provided with holding means (27) for holding the movable panel (30) in the position in which the opening is unobstructed, the transverse partition being **characterized in that** the holding means comprise a pivoting upper deployment panel (27), said upper deployment panel (27) comprising an outer edge (33), the upper border (21) of the opening (20) comprising elements (31, 32) for receiving and locking the outer edge (33) of the upper deployment panel (27) on the upper border (21) of the opening.

2. Transverse partition (1) according to the preceding claim, wherein the pivot pin (Y1) is distinct from the lower border (22) and in contact with the latter by means of connecting loops (23, 24), the pivot pin (Y1) passing through said connecting loops (23, 24).

3. Transverse partition (1) according to either of the preceding claims, wherein the outer edge (33) is provided with a handle (25).

4. Transverse partition (1) according to any one of the preceding claims, wherein the movable panel (30) is formed by a tubular structure (28).

5. Transverse partition (1) according to any one of the preceding claims, wherein the movable panel comprises a rear central panel (35) laterally connected to the fixed panel (10) by means of a plurality of rigid foldable flaps (26).

6. Transverse partition (1) according to the preceding claim, wherein the plurality of rigid foldable flaps (26) connecting the rear central panel (35) to the fixed panel (10) are folded when the movable panel (30) is in a position for closing off the opening (20) and are unfolded when the movable panel (30) is in its position in which the opening is unobstructed.

7. Transverse partition (1) according to either of Claims 5 and 6, wherein the plurality of rigid foldable flaps (26) are formed from flexible material.

8. Vehicle comprising a transverse partition (1) according to any one of the preceding claims and a seat (50), the backrest of which has a clearance within a comfort space (40) that is unobstructed by the movable panel (30) in its deployed position.
